Europäisches Patentamt

European Patent Office

Office européen des brevets

(11) Veröffentlichungsnummer: **0 270 848 B1**

# EUROPÄISCHE PATENTSCHRIFT

(45) Veröffentlichungstag der Patentschrift: **03.07.91**

(51) Int. Cl.⁵: **B27K 3/52**

(21) Anmeldenummer: 87116459.6

(22) Anmeldetag: **07.11.87**

Die Akte enthält technische Angaben, die nach dem Eingang der Anmeldung eingereicht wurden und die nicht in dieser Patentschrift enthalten sind.

(54) **Holzschutzmittel.**

(30) Priorität: **14.11.86 DE 3639063**

(43) Veröffentlichungstag der Anmeldung:
**15.06.88 Patentblatt 88/24**

(45) Bekanntmachung des Hinweises auf die Patenterteilung:
**03.07.91 Patentblatt 91/27**

(84) Benannte Vertragsstaaten:
**AT BE CH DE ES FR GB GR IT LI NL SE**

(56) Entgegenhaltungen:
**EP-A- 0 039 538**
**WO-A-82/03817**
**AU-A- 519 146**
**DE-A- 2 202 448**
**DE-A- 2 461 613**

(73) Patentinhaber: **Dr. Wolman GmbH**
**Dr.-Wolman-Strasse 31-33**
**W-7573 Sinzheim(DE)**

(72) Erfinder: **Goettsche, Reimer, Dr.**
**Waldstrasse 27**
**W-7570 Baden-Baden 19(DE)**
Erfinder: **Marx, Hans-Norbert**
**Mozartweg 8**
**W-7580 Buehl-Weitenung(DE)**
Erfinder: **Hettler, Wendelin**
**Panoramastrasse 9**
**W-7573 Sinzheim-Muellhofen(DE)**

(74) Vertreter: **Schweiss, Werner, Dr. et al**
**BASF Aktiengesellschaft Patentabteilung**
**Carl-Bosch-Strasse 38**
**W-6700 Ludwigshafen(DE)**

**Beschreibung**

Die vorliegende Erfindung betrifft ein Holzschutzmittel z.B. in Form einer wäßrigen Lösung, das eine Kupfer-Verbindung, eine aliphatische Carbonsäure und ein Polyamin enthält,

Holzschutzmittel auf Basis von mit Alkanolaminen, Kupferverbindungen und aliphatischen Monocarbonsäuren ($C_6$-$C_{18}$) sind bekannt (Australische Patentschrift 519146). Bei der Imprägnierung von Holz in großtechnischen Verfahren, z.B. dem Kesseldruckverfahren, mit wäßrigen Lösungen dieses Holzschutzmittels ist die Eindringtiefe und die Verteilung der sich im Holz bildenden Kupfersalze der Carbonsäuren nicht ausreichend, um den Holzschutz z.B. bei Rundhölzern, wie Masten oder Palisaden, insbesondere bei deren Verwendung mit Erdkontakt auf Dauer zu gewährleisten. Es wurde z.B. nur eine Kupfereindringtiefe von ca. 10 mm erreicht.

Es wurde nun gefunden, daß die obengenannten Nachteile nicht auftreten bei Holzschutzmitteln auf Basis von Kupferverbindungen, die 10 bis 40 Gew.% einer aliphatischen $C_5$-$C_{20}$-Carbonsäure und zusätzlich 5 bis 40 Gew.% eines aliphatischen Polyamins enthalten. Als aliphatische Polyamine sind hier insbesondere geeignet z.B. Alkylenpolyamine mit 3 bis 9 C-Atomen und 2 bis 4 N-Atomen, 1,3-Diaminopropan, 1-Methylamino-3-Aminopropan, Dipropylentriamin (3,3'-Diaminodipropylamin), Tripropylentetramin; 1,3-Diaminopropan wird bevorzugt.

Als aliphatische $C_5$-$C_{20}$-Carbonsäuren können z.B. Monocarbonsäuren wie Hexansäure, Heptansäure, Octansäure, Nonansäure, Decansäure, 2-Ethylpentansäure, 2-Ethylhexansäure, 2-Ethylheptansäure, Isooctansäure, Isononansäure, Isodecansäure, Versaticsäuren (stark verzweigte Monocarbonsäuren), Dicarbonsäuren ($C_5$ - $C_{20}$) z. B. Decandicarbonsäure verwendet werden. Geeignet sind auch Polycarbonsäuren wie Polyacrylsäuren. 2-Ethylhexansäure wird bevorzugt.

Diese Säuren bilden mit Kupfer wasserunlösliche Salze, die durch die komplexbildende Wirkung der obengenannten Amine im alkalischen Medium gelöst werden.

Als Kupferverbindungen können wasserlösliche oder unlösliche Verbindungen (z. B. Kupfersalze, Kupfersulfat, Kupferhydroxid, Kupfercarbonat, Kupferacetat, Kupferborat, Kupferfluorid, Kupferfluoroborat) verwendet werden. Kupfercarbonat wird bevorzugt.

Ein Teil des Kupfers kann z.B. auch durch eine entsprechende Zinkverbindung ersetzt werden.

Die wasserverdünnbaren Mittel enthalten - in konzentrierter Form - das Kupfer berechnet als Element, in einer Menge von 1 bis 15 Gew.-%.

Es können zusätzliche diffusionsfähige Anionen wie z.B. Borate, Fluoride, Borfluoride enthalten sein, die nach der Imprägnierung des Holzes durch ihre Diffusion einer Imprägnierung nicht zugängliche Bereiche, wie das Kernholz, schützen.

Die Wirkung des Holzschutzmittels kann z.B. durch Salze des N-Cyclohexyldiazeniumoxids z.B. das Kupfersalz oder das Kaliumsalz ergänzt werden. Auch die Kombination mit quartären Ammoniumverbindungen ist hierfür geeignet.

Eine quartäre Ammoniumverbindung ist z.B. eine Verbindung entsprechend der allgemeinen Formen $(R^1 R^2 R^3 R^4 N) + Z$-, wobei

$R^1$ einen Alkylrest mit 8 bis 20 Kohlenstoffatomen, insbesondere einen Alkylrest mit 12 bis 20 Kohlenstoffatomen oder einen Benzylrest bedeutet, der gegebenenfalls durch $C_1$-$C_{20}$-Alkyl oder Halogen substituiert ist.

$R^2$ $C_1$-$C_6$-Alkyl, $C_3$-$C_9$-Alkoxyalkyl

$R^3$ $C_1$-$C_6$-Alkyl, $C_1$-$C_4$-Alkoxy,

$R^4$ $C_1$-$C_{20}$-Alkyl

bedeuten oder je zwei Reste $R^1$ bis $R^4$ zusammen mit dem Stickstoffatom einen heterocyclischen Rest bilden, der 4 bis 5 Atome, 1 bis 2 N-Atome und eine, zwei oder drei Doppelbindungen enthält, wobei die Kohlenstoffatome gegebenenfalls durch $C_1$ - $C_4$-Alkyl oder Halogen substituiert sind, und Z einen Säurerest bedeutet.

Geeignete Konzentrate enthalten z.B.

```
      5-40 % Kupfer-Verbindung
     10-40 % Carbonsäure/Polycarbonsäure
      5-40 % Polyamin
bis zu    40 % eines fungizid wirksamen diffundierenden Anions
bis zu    30 % Salze des N-Cyclohexyldiazeniumdioxids,
```

wobei die Summe jeweils 100 (Gew.-%) ergibt.

Gegebenenfalls können untergeordnete Mengen an anderen Bestandteilen, wie andere Amine, Ammoniak. Netzmittel, Wasserenthärtungsmittel (Nitriloessigsäure etc.) und erforderlichenfalls Wasser enthalten sein, dessen Anteile jedoch soweit wie möglich gering gehalten wird und im wesentlichen der Handhabung dient.

Die Erfindung erstreckt sich jedoch gleichermaßen auch auf die durch Verdünnung der Konzentrate mit Wasser herstellbaren Imprägnierlösungen, entsprechend den notwendigen Anwendungskonzentrationen, abhängig vom Imprägnierverfahren und Gefährdungsgrad des Holzes.

Die Herstellung der Konzentrate, die in Form von Pasten oder viskosen Lösungen (gegebenenfalls auch als Festsalz) vorliegen können, erfolgt am besten, indem Polyamin, gegebenenfalls zusammen mit Wasser, vorgelegt wird und darin zunächst die Carbonsäuren und gegebenenfalls die Salze mit fungiziden Anionen und/oder Salze des N-Cyclohexyldiazeniumdioxids gelöst werden. Die Kupferverbindungen lösen sich dann in dieser Mischung unter Komplexbildung auf. Die Alkalität der Konzentrate wird so eingestellt, daß einerseits ausreichend Polyamin vorhanden ist, um die Kupferverbindung zu lösen und andererseits durch Zugabe von z.B. weiteren Polyaminen, Amin oder Alkalihydroxid der pH-Wert der Verdünnten Anwendungslösungen im allgemeinen über pH 8 liegt, insbesondere bei 8,5 bis 10 (konzentrationsabhängig) liegt. Beim Imprägnieren dringt die Kupferverbindung gut in das Holz ein, wobei der größte Teil des Kupfers (ca. 70 bis 95 %) im Holz fixiert wird.

Die Holzschutzmittel dringen bei einer Imprägnierung gut in das Holz ein, die imprägnierbaren Bereiche des Holzes (z.B. Splintholz bei Kiefer) werden bei der Kesseldrucktränkung im gesamten Bereich imprägniert. Außerdem wird das Eindringen von Wasser in das imprägnierte Holz erschwert, das imprägnierte Holz wird hierdurch stärker wasserabweisend.

Für die Bestimmung der Eindringtiefe wurden Kieferpalisaden, Länge 1,20 m 15 - 20 cm Durchmesser, Splintbreite mehr als 30 mm im Kesseldruckverfahren (1 Stunde Vakuum, 2 Stunden Druck) imprägniert. Für die Bestimmung der Kupfereindringtiefe wurden die imprägnierten Hölzer in der Mitte aufgeschnitten, die Schnittfläche mit Diethyldithiocarbamat/Na-Salzlösung behandelt (Braunfärbung mit Kupfer) und die Eindringtiefe des Kupfers gemessen. Pro Versuch wurden jeweils 2 Palisaden imprägniert.

Bekannte Vergleichsbeispiele

```
Holzschutzmittel I        13,3 %    Kupfercarbonat
                          30,0 %    Ethanolamin
                           5,0 %    Borsäure
                          36,7 %    2-Ethylhexansäure
                          15,0 %    Wasser
                         100   %
```

Anwendungskonzentration: 4 %
Es wurden die folgenden mittleren Eindringtiefen bestimmt
13,7 mm und 12,0 mm

```
Holzschutzmittel II       13,3 %    Kupfercarbonat
                          30,0 %    Ethanolamin
                          36,7 %    Polyacrylsäure (n = 10 - 100)
                          20,0 %    Wasser
                         100   %
```

Anwendungskonzentration: 4 %
Mittlere Eindringtiefe: 9,1 mm und 14,0 mm

Erfindungsgemäße Beispiele

3

Beispiel 1      13,3 %      Kupfercarbonat

28,0 %      Dipropylentriamin

10,0 %      Borsäure

42,0 %      Nonansäure

6,7 %      Wasser

Anwendungskonzentration: 4 %
Mittlere Eindringtiefe: 32,1 mm und 29,3 mm

Beispiel 2      13,3 %      Kupfercarbonat

28,0 %      Dipropylentriamin

10,0 %      Borsäure

36,7 %      Isooctansäure

12,0 %      Wasser

100 %

Anwendungskonzentration: 4 %
Mittlere Eindringtiefe: 41,0 mm und 34,1 mm

Beispiel 3      10,0 %      Kupfercarbonat

16,5 %      1,3-Diaminopropan

27,5 %      2-Ethylhexansäure

4,0 %      Borsäure

2,5 %      Nitrilotriessigsäure

5,0 %      Kaliumsalz des N-Cyclohexyldiazeniumdioxides

34,5 %      Wasser

100 %

Anwendungskonzentration: 4 %
Mittlere Eindringtiefe: 29,1 mm und 37,2 mm

Beispiel 4      13,3 %      Kupfercarbonat

13,3 %      1,3-Diaminopropan

11,4 %      1-Methylamino-3-aminopropan

10,0 %      Borsäure

36,7 %      2-Ethylhexansäure

15,3 %      Wasser

100 %

Anwendungskonzentration: 4 %
Mittlere Eindringtiefe: 36,5 mm und 28,3 mm

EP 0 270 848 B1

| Beispiel 5 | 10,0 % | Kupfercarbonat |
| | 15,0 % | Tripropylentetramin |
| | 10,0 % | Dipropylentriamin |
| | 25,0 % | 2-Ethylhexansäure |
| | 20,0 % | Dimethyl-$C_{12}$-alkylbenzylammoniumchlorid |
| | 20,0 % | Wasser |
| | 100 % | |

Anwendungskonzentration: 4 %
Es wurden die folgenden mittleren Eindringtiefen bestimmt:
35,2 mm und 40,1 mm

Ferner wurden Kiefernsplintholzklötzchen mit erfindungsgemäßen Lösungen imprägniert und ca. 6 Wochen zur Fixierung und Abtrocknung (Wassergehalt 16 bis 18 %) gelagert.

Die Wasseraufnahme der imprägnierten Klötzchen durch erneutes Imprägnieren mit Wasser wurde gewichtsmäßig bestimmt und in Vergleich gesetzt zu Klötzchen, die ausschließlich mit Wasser behandelt und entsprechend getrocknet worden waren. Deren erneute Wasseraufnahme (Nullprobe) wurde zu Vergleichszwecken als 100 festgesetzt. Die Messungen erfolgten jeweils mit 10 Parallelen. Es zeigte sich, daß die imprägnierten Klötzchen weniger Wasser aufnehmen als die mit Wasser behandelten Klötzchen.

**Ansprüche**

1. Holzschutzmittel auf der Basis einer Kupferverbindung und einer aliphatischen Carbonsäure, dadurch gekennzeichnet, daß das Mittel 10 bis 40 Gew.% einer aliphatischen $C_5$-$C_{20}$-Carbonsäure und zusätzlich 5 bis 40 Gew.% eines aliphatischen Polyamins enthält.

2. Mittel nach Anspruch 1, dadurch gekennzeichnet, daß die Carbonsäure 2-Ethylhexansäure ist.

3. Mittel nach Anspruch 1, dadurch gekennzeichnet, daß die Carbonsäure eine Isooctansäure ist.

4. Mittel nach Anspruch 1, dadurch gekennzeichnet, daß die Kupferverbindung Kupferoxid, Kupferhydroxid oder Kupfercarbonat ist.

5. Verfahren zum Schutz von Holz, dadurch gekennzeichnet, daß man das Holz mit einer Imprägnierlösung behandelt, die durch Verdünnen mit Wasser aus einem Holzschutzmittel gemäß Anspruch 1 hergestellt worden ist.

6. Mittel nach Anspruch 1, dadurch gekennzeichnet, daß das Polyamin 1,3-Diaminopropan ist.

7. Mittel nach Anspruch 1, dadurch gekennzeichnet, daß es zusätzlich ein Alkalisalz oder Kupfersalz des N-Cyclohexyldiazeniumdioxids enthält.

**Claims**

1. A wood preservative based on a copper compound and an aliphatic carboxylic acid, wherein the said preservative contains from 10 to 40% by weight of an aliphatic $C_5$-$C_{20}$-carboxylic acid and additionally contains from 5 to 40% by weight of an aliphatic polyamine.

2. A preservative as claimed in claim 1, wherein the carboxylic acid is 2-ethylhexanoic acid.

3. A preservative as claimed in claim 1, wherein the carboxylic acid is an isooctanoic acid.

4. A preservative as claimed in claim 1, wherein the copper compound is copper oxide, copper hydroxide or copper carbonate.

5

5. A method of protecting wood, wherein the wood is treated with an impregnation solution prepared by diluting a wood preservative as claimed in claim 1 with water.

6. A preservative as claimed in claim 1, wherein the polyamine is 1,3-diaminopropane.

7. A preservative as claimed in claim 1, which additionally contains an alkali metal salt or a copper salt of N-cyclohexyldiazenium dioxide.

**Revendications**

1. Agent de protection du bois à base d'un composé de cuivre et d'un acide carboxylique aliphatique, caractérisé par le fait que l'agent contient 10 à 40 % en poids d'un acide carboxylique en $C_5$-$C_{20}$ aliphatique et additionnellement 5 à 40 % en poids d'une polyamine aliphatique.

2. Agent selon la revendication 1, caractérisé par le fait que l'acide carboxylique est l'acide 2-éthylhéxanoïque.

3. Agent selon la revendication 1, caractérisé par le fait que l'acide carboxylique est l'acide isooctanoïque.

4. Agent selon la revendication 1, caractérisé par le fait que le composé de cuivre est l'oxyde de cuivre, l'hydroxyde de cuivre ou le carbonate de cuivre.

5. Procédé pour la protection du bois, caractérisé par le fait que l'on traite le bois avec une solution d'imprégnation qui a été obtenue par solution avec de l'eau d'un agent de protection du bois selon la revendication 1.

6. Agent selon la revendication 1, caractérisé par le fait que la polyamine est le 1,3-diaminopropane.

7. Agent selon la revendication 1, caractérisé par le fait qu'il contient additionnellement un sel alcalin ou un sel de cuivre de dioxyde de N-cyclohéxyldiazenium.